# EUROPÄISCHE PATENTSCHRIFT

(11) **EP 3 232 070 B1**
(45) Veröffentlichungstag und Bekanntmachung des Hinweises auf die Patenterteilung: **20.02.2019**
(21) Anmeldenummer: 17165653.1
(22) Anmeldetag: 10.04.2017
(51) Int. Cl.: F16B 37/12

(54) **SELBSTSCHNEIDENDER GEWINDEEINSATZ UND VERFAHREN ZU SEINER HERSTELLUNG**
SELF-CUTTING THREAD INSERT AND METHOD FOR ITS PRODUCTION
INSERT FILETÉ AUTOCOUPANT ET SON PROCÉDÉ DE FABRICATION

(30) Priorität: 15.04.2016 DE 102016107034
(43) Veröffentlichungstag der Anmeldung: 18.10.2017
(73) Patentinhaber: Fairchild Fasteners Europe - Camloc GmbH, 65779 Kelkheim (Taunus) (DE)
(72) Erfinder: Scholz, Philipp, 67737 Olsbrücken (DE)
(74) Vertreter: Keil & Schaafhausen Patent- und Rechtsanwälte PartGmbB

(56) Entgegenhaltungen:
- EP-B1- 0 113 859
- DE-A1-102014 213 610
- US-A1- 2017 122 359

## Beschreibung

Die Erfindung betrifft einen selbstschneidenden Gewindeeinsatz mit einem hülsenartigen Grundkörper. Dieser erstreckt sich entlang einer Längsachse von einer ersten Stirnseite zu einer zweiten Stirnseite. Der Außendurchmesser des Grundkörpers verringert sich in einem an die erste Stirnseite angrenzenden konischen Bereich. Der Grundkörper weist eine sich entlang der Längsachse erstreckende Durchgangsöffnung mit geschlossener Innenwand und ein Innengewinde sowie ein Außengewinde auf. Im konischen Bereich im Außengewinde ist wenigstens eine Schneidnut vorgesehen, mit der das Außengewinde ein Gewinde in eine Bohrung eines Bauteils einschneiden kann. Weiter betrifft die Erfindung ein Verfahren zur Herstellung eines solchen Gewindeeinsatzes.

Selbstschneidende Gewindeeinsätze werden dazu verwendet, in eine einfache Bohrung eines Werkstücks eigenständig ein Gewinde zu schneiden. Dabei dient der Gewindeeinsatz als Verstärkung in dem Werkstück, welches in der Regel aus einem weichen bis mittelfestem Material besteht, z. B. Kunststoff oder Aluminium. Die Gewindeeinsätze bestehen in der Regel aus einem Innen- und einem Außengewinde. Das Außengewinde ist dabei durch Schneidbohrungen, Schlitze oder Nuten durchbrochen, um eine Schneidkante zu erzeugen.

Oftmals besitzen die Schneidkonturen der Gewindeeinsätze eine komplexe Geometrie. Dies hat zur Folge, dass die Fertigung dieser Teile aufwendig und nur mit speziellen Werkzeugen möglich ist. Dadurch steigt die Durchlaufzeit der Fertigung an und verringert zeitgleich die Standzeit der Werkzeuge.

Ein Gewindeeinsatz der oben genannten Art ist beispielsweise aus der Ausführungsform der Figuren 6 bis 8 der EP 0 113 859 B1 mit einer rechteckigen Schneidnut bekannt. Die Herstellung einer solchen rechteckigen Schneidnut im konischen Bereich des Gewindeeinsatzes ist sehr aufwändig.

Alternativ ist es aus weiteren Ausführungsformen der EP 0 113 859 B1 bekannt, Schneidnuten durch Sacklochbohrungen oder schlitzartige Einschnitte zu bilden. Erstere werden hinsichtlich der Wandstärkengeometrie und der Fertigung als nachteilig empfunden. Schlitzartige Einschnitte, die auch aus der DE 32 43 255 A1, der EP 0 212 638 B1 und der EP 0 123 833 B1 bekannt sind, führen dazu, dass nicht nur das Außengewinde, sondern auch das Innengewinde und die Innenwand des Grundkörpers durchbrochen werden. Dadurch wird zum einen das Innengewinde geschwächt und zum anderen gelangen die Späne bei der Installation in das Innere des Gewindeeinsatzes. Diese Späne können sich beim Ein- oder Ausdrehen einer Schraube verklemmen. Deshalb werden diese Späne, in der Regel nachträglich, entfernt, was einen Mehraufwand bei der Installation bedeutet. Dieses Problem tritt auch auf, wenn, wie dies in der EP 0 915 262 B1 vorgeschlagen wird, Schneidkanten statt durch Sacklochbohrungen mittels Durchgangsbohrungen gebildet werden.

In der US 6,530,731 B2 wird eine weitere Alternative beschrieben, bei der eine keilförmige Schneidnut in eine geschlossene Stirnseite eines Gewindeeinsatzes eingebracht wird. Durch die einseitig geschlossene Gestaltung des Gewindeeinsatzes wird dieser verlängert und ist hinsichtlich unterschiedlicher Einschraubtiefen von Bolzen in das Innengewinde limitiert.

Aufgabe der vorliegenden Erfindung ist es demgegenüber, einen Gewindeeinsatz sowie ein Verfahren zu seiner Herstellung bereitzustellen, wobei der Herstellungsaufwand einer Schneidnut, die ein gutes Schneidergebnis liefert, ohne das Innengewinde zu beschädigen, gering ist.

Diese Aufgabe wird mit einem Gewindeeinsatz nach Anspruch 1 sowie einem Verfahren nach Anspruch 10 gelöst.

Ein erfindungsgemäßer Gewindeeinsatz zeichnet sich dadurch aus, dass die wenigstens eine Schneidnut durch eine Ausnehmung in dem Grundkörper definiert ist, deren Form im Wesentlichen durch den Schnittbereich des Grundkörpers mit einem zumindest bereichsweise kegelförmigen Körper definiert ist, der zumindest eine Kegelbasisfläche, eine konische Kegelmantelfläche und eine Symmetrieachse aufweist. Um die Schneidgeometrie zu verbessern, kann der Schnittpunkt der Symmetrieachse des kegelförmigen Körpers mit der Kegelbasisfläche des kegelförmigen Körpers in der durch die erste Stirnseite definierten Ebene liegen. Dies bewirkt, dass die Schneidnut eine sich zur ersten Stirnseite hin vertiefende konkave Form aufweist, die eine gute Spanabfuhr bewirkt. Alternativ hierzu kann der Schnittpunkt der Symmetrieachse des kegelförmigen Körpers mit der Kegelbasisfläche in Richtung von der zweiten Stirnseite weg zu der durch die erste Stirnseite definierten Ebene versetzt sein. Auch dies bewirkt die Ausbildung einer sich zur ersten Stirnseite hin vergrößernden konkaven Schneidnut.

Das Schneidergebnis kann dadurch weiter verbessert werden, dass der Schneidwinkel α, der im Schnittpunkt der Kegelbasisfläche des kegelförmigen Köpers mit dem Außenumfang der ersten Stirnseite des Grundkörpers zwischen der Ebene der Kegelbasisfläche und dem Radius des Grundkörpers gebildet wird, größer ist, als der Neigungswinkel β zwischen der konischen Kegelmantelfläche des kegelförmigen Körpers und der Symmetrieachse des kegelförmigen Köpers. Es hat sich als besonders vorteilhaft herausgestellt, wenn der Schneidwinkel α um den Faktor 1,1 bis 7 größer als der Neigungswinkel β ist. Insbesondere kann der Schneidwinkel α um den Faktor 2,5 bis 5,5, vorzugsweise etwa um den Faktor 4, größer als der Schneidwinkel β sein. Durch diese Ausgestaltung ist es möglich, eine an der Schneidkante vergleichsweise tief in den Grundkörper eindringende Schneidnut auszubilden, die eine gute Spanabfuhr und ein gutes Schneidergebnis bewirkt, ohne dass die Schneidnut das Innengewinde des Gewindeeinsatzes unterbricht. Somit wird vermieden, dass Späne in das Innengewinde eindringen und ein nachträgliches Reinigen des Gewindeeinsatzes erforderlich wird. Die oben beschriebenen Maßnahmen führen zudem dazu, dass die Schneidkontur leicht und schnell herzustellen ist und neben einer verbesserten Spanabfuhr für einen guten Anschnitt und eine gute Positionierung des Gewindeeinsatzes in der Bohrung eines Werkstücks sorgt.

Der Schneidwinkel α wird vorzugsweise auch unter Berücksichtigung des Materials eingestellt, in welches der Gewindeeinsatz eingeschraubt werden soll. Während für Kunststoffe teilweise schon sehr geringe Schneidwinkel ausreichend sein können, sind diese für metallische Werkstoffe vorzugsweise größer. Für den erfindungsgemäßen Gewindeeinsatz wird es bevorzugt, wenn der Schneidwinkel α zwischen etwa 10° und etwa 30° beträgt, insbesondere zwischen etwa 12° und etwa 20°, z.B. etwa 17°. Ein solcher Schneidwinkel ist bspw. für Aluminium besonders günstig.

Die Einstellung eines Schneidwinkels α in dem oben genannten Bereich kann dadurch besonders einfach erreicht werden, dass die Längsachse des Grundkörpers gegenüber dem Schnittpunkt der Symmetrieachse des kegelförmigen Körpers mit der Kegelbasisfläche in Richtung von der Kegelbasisfläche weg versetzt ist. Dies führt zudem dazu, dass die Schneidnut vergleichsweise breit ist, wodurch die Spanabfuhr verbessert wird.

Nach einer Ausführungsform der Erfindung kann die Kegelbasisfläche des kegelförmigen Köpers parallel zu der Längsachse des Grundkörpers ausgerichtet sein. Alternativ hierzu ist es auch möglich, die Kegelbasisfläche des kegelförmigen Köpers zu der Längsachse des Grundkörpers um einen Winkel γ in der Richtung zu neigen, dass die von der Kegelbasisfläche wegweisende Seite des kegelförmigen Körpers auf die erste Stirnseite des Grundkörpers zu verschwenkt ist. Diese Ausgestaltung führt dazu, dass die durch die Schneidnut und das Außengewinde des Grundkörpers definierten Angriffspunkte des selbstschneidenden Außengewindes an der Bohrung des Werkstücks, in welches der Gewindeeinsatz eingeschraubt werden soll, in Drehrichtung des Gewindeeinsatzes zueinander versetzt sind. Dieser Versatz erfolgt so, dass in der Nähe der ersten Stirnseite des Grundkörpers erzeugte Späne abgeführt werden können, ohne durch Späne blockiert zu werden, die weiter in Richtung der zweiten Stirnseite des Grundkörpers erzeugt werden. Der Winkel y, um den die Kegelbasisfläche zu der Längsachse des Grundkörpers verschwenkt ist, kann erfindungsgemäß bis zu 45° betragen.

Für das Schneidergebnis des Gewindeeinsatzes hat es sich als besonders vorteilhaft erwiesen, wenn der Neigungswinkel β zwischen etwa 1° und etwa 15° beträgt. Insbesondere kann der Neigungswinkel β zwischen etwa 3° und etwa 7°, bspw. etwa 5°, betragen.

Um das Einbringen eines Gewindes in die Bohrung eines Werkstücks mittels des erfindungsgemäßen Gewindeeinsatzes zu erleichtern, können um den Umfang des Grundkörpers verteilt mehrere Schneidnuten vorgesehen sein. Vorzugsweise sind die Schneidnuten gleichmäßig um den Umfang des Grundkörpers verteilt. Es hat sich bspw. als besonders zweckmäßig herausgestellt, wenn der erfindungsgemäße Gewindeeinsatz drei jeweils um 120° zueinander versetzte Schneidnuten aufweist.

Der Durchmesser der Kegelbasisfläche des kegelförmigen Körpers ist, insbesondere bei Außendurchmessern des Grundkörpers von z.B. bis zu 40 mm, vorzugsweise größer als der Außendurchmesser des Grundkörpers an seiner ersten Stirnseite. Beispielsweise kann der Durchmesser der Kegelbasisfläche um den Faktor 1,5 bis 7, vorzugsweise um den Faktor etwa 3 bis etwa 5, größer als der Außendurchmesser des Grundkörpers an der ersten Stirnseite sein.

Die Kerbwirkung im Nutgrund der Schneidnut kann dadurch verringert werden, dass der kegelförmige Körper ein Kegelstumpf ist, dessen Kante zwischen der konischen Kegelmantelfläche und der Kegelbasisfläche mit einer Fase versehen ist. Beispielsweise kann die Fase einen Winkel von 45° zwischen der konischen Kegelmantelfläche und der Kegelbasisfläche bilden.

Ein erfindungsgemäßes Verfahren zur Herstellung eines Gewindeeinsatzes der oben genannten Art erfolgt, indem in einen hülsenartigen Grundkörper, der sich entlang einer Längsachse von einer ersten Stirnseite zu einer zweiten Stirnseite erstreckt und eine sich entlang der Längsachse erstreckenden Durchgangsöffnung mit geschlossener Innenwand aufweist, wenigstens eine Schneidnut mittels der konischen Kegelmantelfläche eines um eine Symmetrieachse rotierenden kegelstumpfförmigen Sägeblatts eingebracht wird, ohne dass das Sägeblatt die geschlossene Innenwand der Durchgangsöffnung berührt. Somit bleibt die Innenwand der Durchgangsöffnung geschlossen, wodurch das Eindringen von Spänen in den Gewindeeinsatz während des Einschraubens in ein Werkstück vermieden wird. Die Schneidnut kann erfindungsgemäß durch Einstechen des Sägeblatts in die Außenfläche des hülsenartigen Grundkörpers erfolgen, was besonders rasch, präzise und mit geringem Aufwand möglich ist. Damit ist das erfindungsgemäße Herstellungsverfahren geeignet, in kurzer Zeit mit hoher Präzision Schneidnuten in dem hülsenartigen Grundkörper des Gewindeeinsatzes zu bringen.

Es wird bevorzugt, wenn der hülsenartige Grundkörper vor dem Einbringen der wenigstens einen Schneidnut mit einem an die erste Stirnseite angrenzenden konischen Bereich, einem Innengewinde und einem Außengewinde versehen wird. Das Innengewinde ist dabei vorzugsweise ein ununterbrochenes Regel-Innengewinde. Das Außengewinde kann ein Regelfeingewinde oder ein Außengewinde mit angehobenem Kerndurchmesser sein, um die Wandstärke des hülsenartigen Grundkörpers zu erhöhen.

Für das Einbringen der wenigstens einen Schneidnut ist eine Relativbewegung des rotierenden Sägeblatts zu dem Grundkörper erforderlich. Zweckmäßigerweise erfolgt dies, indem das rotierende Sägeblatt relativ zu dem ortsfesten Grundkörper bewegt wird. Wenn mehrere Schneidnuten in den erfindungsgemäßen Gewindeeinsatz eingebracht werden sollen, kann der Grundkörper nach dem Einbringen einer ersten Schneidnut relativ zu dem Sägeblatt um die Längsachse des Grundkörpers gedreht werden, wonach dann eine weitere Schneidnut in den Grundkörper eingebracht werden kann.

Es wird bevorzugt, wenn der Grundkörper des Gewindeeinsatzes mit einer Randschichthärtung versehen wird. Die Randschicht des Gewindeeinsatzes kann bspw. durch Nitrocarburierung thermochemisch mit Stickstoff und Kohlenstoff angereichert werden. Alternativ oder zusätzlich kann auf die Oberfläche des Gewindeeinsatzes zumindest bereichsweise eine Beschichtung aufgebracht werden, die bspw. korrosionshemmende Eigenschaften haben kann und/oder den Reibungskoeffizient beeinflussen, insbesondere senken, kann. Dies kann bspw. mittels eines Zinklammellenüberzugs erfolgen.

Weitere Merkmale, Vorteile und Anwendungsmöglichkeiten der vorliegenden Erfindungen ergeben sich aus der nachfolgenden Beschreibung eines Ausführungsbeispiels und unter Bezugnahme auf die Zeichnungen.

Es zeigen:
- Fig. 1: in Perspektivansicht einen erfindungsmäßen Gewindeeinsatz,
- Fig. 2: in Seitenansicht den Gewindeeinsatz nach Fig. 1,
- Fig. 3: in Draufsicht den Gewindeeinsatz nach Fig. 1,
- Fig. 4: in Draufsicht ein Sägeblatt zur Herstellung der Schneidnuten des Gewindeeinsatzes nach Fig. 1,
- Fig. 5: einen Schnitt durch das Sägeblatt nach Fig. 4 entlang der Linie A-A in Fig. 4,
- Fig. 6: vergrößert eine Detail B der Fig. 5,
- Fig. 7: in Draufsicht ein Detail des Gewindeeinsatzes nach Fig. 1 während der Bearbeitung mit einem Sägeblatt nach Fig. 4 und
- Fig. 8: in Perspektivansicht die Herstellung eines Gewindeeinsatzes nach Fig. 1 mit einem Sägeblatt nach Fig. 4.

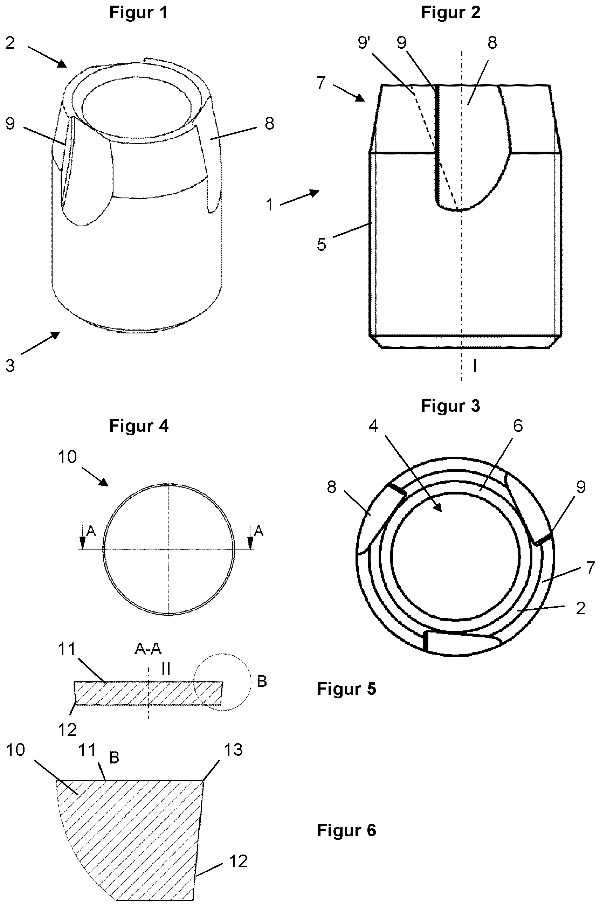

Der in den Fig. 1 bis 3 gezeigte Gewindeeinsatz weist einen hülsenartigen Grundkörper 1 mit einer in den Fig. 1 und 2 oberen ersten Stirnseite 2 und einer gegenüberliegenden zweiten Stirnseite 3 auf. Der Grundköper 1 ist mit einer Durchgangsöffnung 4 ausgebildet, die sich entlang einer Längsachse I erstreckt. Auf der Außenmantelfläche des Grundkörpers 1 ist ein Außengewinde 5 vorgesehen und auf der Innenmantelfläche des Grundkörpers 1 ist ein Innengewinde 6 vorgesehen. Das der ersten Stirnseite 2 zugewandte Ende des Grundkörpers 1 ist mit einer Fase versehen, durch welche ein konischer Bereich 7 gebildet wird, durch den sich der Grundkörper 1 ausgehend von einer zylindrischen Außenfläche in Richtung zu der ersten Stirnseite 2 verjüngt.

In der dargestellten Ausführungsform ist der selbstschneidende Gewindeeinsatz mit drei jeweils um 120° zueinander versetzt angeordneten Schneidnuten 8 versehen, die an dem der ersten Stirnseite 2 zugewandten Ende des Gewindeeinsatzes ausgebildet sind. Die Schneidnuten 8 definieren jeweils mit der Außenmantelfläche des Grundkörpers 1 eine Schneidkante 9, die zumindest teilweise mit dem Außengewinde 5 versehen ist. Hierdurch ist das Außengewinde selbstschneidend ausgebildet, so dass in einem nicht dargestellten Werkstück mit einer zylindrischen Bohrung durch Einschrauben des Gewindeeinsatzes ein Innengewinde in der Bohrung erzeugt werden kann.

Zur Herstellung der Schneidnuten 8 in dem Gewindeeinsatz wird ein Sägeblatt 10 verwendet, welches in den Fig. 4 bis 6 dargestellt ist. Im Vergleich zu dem Gewindeeinsatz nach den Fig. 1 bis 3 ist das Sägeblatt 10 in den Fig. 4 und 5 verkleinert dargestellt. So kann das Sägeblatt 10 einen größeren Außendurchmesser aufweisen als der Grundköper 1.

Wie aus den Fig. 4 bis 6 ersichtlich ist, hat das Sägeblatt 10 im Wesentlichen die Form eines Kegelstumpfs mit einer Kegelbasisfläche 11, einer Rotations- oder Symmetrieachse II sowie einer zu der Symmetrieachse II geneigt verlaufenden Kegelmantelfläche 12. Wie aus der Detailansicht der Fig. 6 ersichtlich ist, kann das Sägeblatt 10 an der die Kegelgrundfläche 11 mit der Kegelmantelfläche 12 verbindenden Kante mit einer Fase 13 versehen sein, die bspw. in einem Winkel von 45° zu der Kegelbasisfläche 11 verläuft. Die Kegelmantelfläche 12 ist zu der Symmetrieachse II in dem dargestellten Ausführungsbeispiel um einen Winkel β von etwa 5° geneigt. Die Kegelmantelfläche 12 des Sägeblatts 10 kann bspw. mit einer spanabhebenden Profilierung zur Bearbeitung des Grundkörpers 1 ausgestattet sein. Der Begriff Symmetrieachse II ist daher nicht so zu verstehen, dass das Sägeblatt 10 vollständig symmetrisch sin muss.

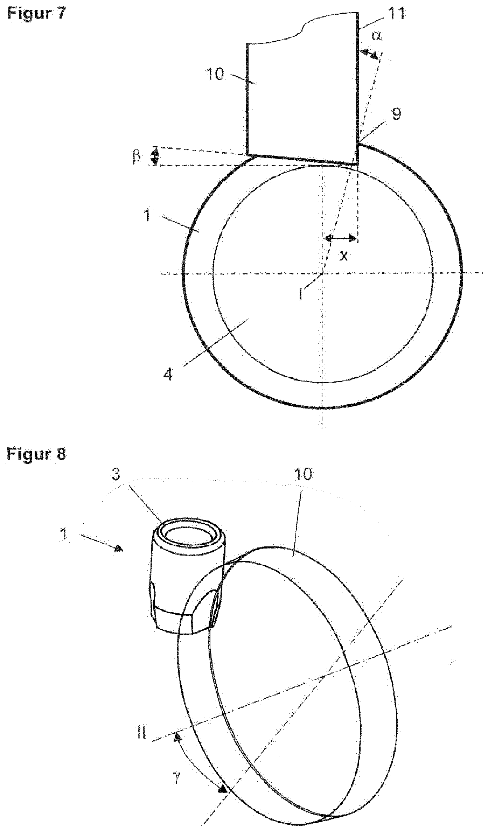

Unter Bezugnahme auf die Fig. 7 und 8 wird nachfolgend die Herstellung eines Gewindeeinsatzes mit Schneidnuten 8 aus einem hülsenartigen Grundkörper 1 näher erläutert. Hierzu wird das um die Symmetrieachse II rotierende Sägeblatt 10 bspw. in der in den Fig. 7 und 8 dargestellten Ausrichtung relativ zu dem Grundkörper an dessen Außenfläche herangeführt, bis dieses in den Grundkörper 1 einschneidet. Dieses seitliche Einstechen des Sägeblatts 10 in den Grundkörper 1 wird hinsichtlich der Eindringtiefe so begrenzt, dass die Innenwand der Durchgangsöffnung 4 und damit das Innengewinde 6 des Grundkörpers 1 nicht mit dem Sägeblatt 10 in Kontakt kommt. Mit anderen Worten bleibt die Innenwand der Durchgangsöffnung 4 geschlossen.

Um ein gutes Schneidergebnis mit dem Gewindeeinsatz zu erzielen, ist u.a. ein guter Spanabtransport erforderlich. Dies wird dadurch begünstigt, dass die Schneidnut 8 vergleichsweise groß ausgestaltet ist. Wie aus Fig. 7 ersichtlich ist, kann dies dadurch erreicht werden, dass die Kegelbasisfläche 11 zu einer durch die Längsachse I des Grundkörpers 1 definierte Ebene während des Schneidvorgangs in der Darstellung der Fig. 7 nach rechts um die Strecke x versetzt ist. Aufgrund dieses Versatzes würde ein zylindrisches Sägeblatt zu tief in den Grundkörper 1 einschneiden und damit potentiell das Innengewinde 6 durchdringen, was unerwünscht ist. Dem wirkt die kegelstumpfartige Gestalt des Sägeblatts 10 mit der Neigung der Kegelmantelfläche 12 zu der Symmetrieachse II um den Winkel β entgegen.

Der Versatz der Kegelbasisfläche 11 zu der Eben der Längsachse I um den Betrag x bewirkt zudem, dass sich ein positiver Schneidwinkel α (> 0°) zwischen der die Schneidkante 9 bildenden Wand (bzw. der Kegelbasisfläche 11) und dem durch die Schneidkante 9 verlaufenden Radius des Grundkörpers 1 bildet. Der Schneidwinkel α verbessert die Spanabfuhr. Es wird besonders bevorzugt, wenn der Schneidwinkel α größer als der Winkel β zwischen der Kegelmantelfläche 12 und der Symmetrieachse II des Sägeblatts 10 ist. In dem dargestellten Ausführungsbeispiel beträgt der Schneidwinkel α etwa 17° und ist damit um den Faktor 3 bis 4 größer als der Winkel β.

Um die jeweilige Schneidnut 8 in Richtung der Längsachse I des Grundkörpers 1 hinterschnittfrei auszubilden, liegt die Symmetrieachse II des Sägeblatts 10 in Richtung der Längsachse I des Grundkörpers 1 entweder in der durch die erste Stirnseite 2 definierten Ebene oder ist in Richtung von der zweiten Stirnseite 3 weg von der ersten Stirnseite 2 versetzt. Hierdurch erhält die Schneidnut 8 auch die in Fig. 1 gezeigte konkave Ausgestaltung.

In dem in Fig. 8 gezeigten Ausführungsbeispiel ist die Symmetrieachse II des Sägeblatts 10 zudem parallel zu der Ebene ausgerichtet, die durch die erste Stirnseite 2 des Grundkörpers 1 gebildet wird. Dies bewirkt, dass die Schneidkante 9 wie auch in den Fig. 2 und 7 gezeigt parallel zu der Längsachse I des Grundkörpers 1 verläuft.

Abweichend von dieser Ausgestaltung ist es auch möglich, die Symmetrieachse II des Sägeblatts 10 um einen Winkel y, der in Fig. 8 angedeutet ist, derart zu verschwenken, dass die von der Kegelbasisfläche 11 wegweisende Seite des mit dem Grundkörper 1 in Eingriff stehenden Bereichs des Sägeblatts 10 in Richtung zu der ersten Stirnseite 2 verschwenkt wird. Dieser Winkel γ kann zwischen 0° und etwa 45° gewählt werden. In Fig. 2 ist durch die gestrichelte Linie 9' der Verlauf der Schneidkante angedeutet, wenn die Symmetrieachse II des Sägeblatts 10 wie beschrieben um einen Winkel γ größer 0 zu der durch die erste Stirnseite 2 aufgespannte Ebene verschwenkt wird. Mit anderen Worten führt eine solche Neigung der Symmetrieachse II des Sägeblatts 10 dazu, dass der näher an der ersten Stirnseite 2 gelegene Bereich der Schneidkante 9 gegenüber einem näher an der zweiten Stirnseite 3 gelegenen Bereich der Schneidkante 9 nachläuft. Dies kann die Spanabfuhr weiter verbessern.

### Bezugszeichen:

- 1: Grundkörper
- 2: erste Stirnseite
- 3: zweite Stirnseite
- 4: Durchgangsöffnung
- 5: Außengewinde
- 6: Innengewinde
- 7: konischer Bereich
- 8: Schneidnut
- 9, 9': Schneidkante
- 10: Sägeblatt
- 11: Kegelbasisfläche
- 12: Kegelmantelfläche
- 13: Fase

- α: Schneidwinkel
- β: Winkel der Kegelmantelfläche mit der Symmetrieachse
- γ: Neigungswinkel der Symmetrieachse

- x: Versatz der Kegelbasisfläche zur Längsachse

- I: Längsachse des Grundkörpers
- II: Symmetrieachse des Sägeblatts

## Patentansprüche

1. Selbstschneidender Gewindeeinsatz mit einem hülsenartigen Grundkörper (1),
der sich entlang einer Längsachse (I) von einer ersten Stirnseite (2) zu einer zweiten Stirnseite (3) erstreckt,
dessen Außendurchmesser sich in einem an die erste Stirnseite (2) angrenzenden konischen Bereich (7) verringert,
der eine sich entlang der Längsachse (I) erstreckende Durchgangsöffnung (4) mit geschlossener Innenwand aufweist, und
der ein Innengewinde (6) sowie ein Außengewinde (7) aufweist,
wobei im konischen Bereich (7) im Außengewinde (5) wenigstens eine Schneidnut (8) vorgesehen ist, **dadurch gekennzeichnet, dass**
die wenigstens eine Schneidnut (8) durch eine Ausnehmung in dem Grundkörper (1) definiert ist, deren Form im Wesentlichen durch den Schnittbereich des Grundkörpers (1) mit einem zumindest bereichsweise kegelförmigen Körper (10) definiert ist, der zumindest eine Kegelbasisfläche (11), eine konische Kegelmantelfläche (12) und eine Symmetrieachse (II) aufweist, wobei der Schnittpunkt der Symmetrieachse (II) mit der Kegelbasisfläche (11) in der durch die erste Stirnseite (2) definierten Ebene liegt oder in Richtung von der zweiten Stirnseite (3) weg zu der durch die erste Stirnseite (2) definierten Ebene versetzt ist und wobei der Schneidwinkel (α), der im Schnittpunkt der Kegelbasisfläche (11) mit dem Außenumfang der ersten Stirnseite (2) zwischen der Ebene der Kegelbasisfläche (11) und dem Radius des Grundkörpers (1) gebildet wird, größer ist als der Neigungswinkel (β) zwischen der konischen Kegelmantelfläche (12) und der Symmetrieachse (II).

2. Gewindeeinsatz nach Anspruch 1, **dadurch gekennzeichnet, dass** der Schneidwinkel (α) um den Faktor 1,1 bis 7 größer, insbesondere um den Faktor 2,5 bis 5,5 größer, als der Neigungswinkel (β) ist.

3. Gewindeeinsatz nach Anspruch 1 oder 2, **dadurch gekennzeichnet, dass** der Schneidwinkel (α) zwischen 10° und 30°, insbesondere zwischen 12° und 20°, beträgt.

4. Gewindeeinsatz nach einem der vorhergehenden Ansprüche, **dadurch gekennzeichnet, dass** die Längsachse (I) gegenüber dem Schnittpunkt der Symmetrieachse (II) mit der Kegelbasisfläche (11) um den Wert x in Richtung von der Kegelbasisfläche (11) weg versetzt ist.

5. Gewindeeinsatz nach einem der vorhergehenden Ansprüche, **dadurch gekennzeichnet, dass** die Kegelbasisfläche (11) parallel zu der Längsachse (I) ist oder zu der Längsachse (I) um einen Winkel (γ) von bis zu 45° in der Richtung geneigt ist, dass die von der Kegelbasisfläche (11) wegweisende Seite des Schnittbereichs (9, 9') des Grundkörpers (1) mit dem kegelförmigen Körper (10) auf die erste Stirnseite (2) zu verschwenkt ist.

6. Gewindeeinsatz nach einem der vorhergehenden Ansprüche, **dadurch gekennzeichnet, dass** der Neigungswinkel (β) zwischen 1° und 15°, insbesondere zwischen 3° und 7°, beträgt.

7. Gewindeeinsatz nach einem der vorhergehenden Ansprüche, **dadurch gekennzeichnet, dass** um den Umfang des Grundkörpers (1) mehrere Schneidnuten (8), insbesondere gleichmäßig, verteilt sind.

8. Gewindeeinsatz nach einem der vorhergehenden Ansprüche, **dadurch gekennzeichnet, dass** der Durchmesser der Kegelbasisfläche (11) größer, insbesondere um den Faktor 1,5 bis 7 größer, als der Außendurchmesser des Grundkörpers (1) an der ersten Stirnseite (2) ist.

9. Gewindeeinsatz nach einem der vorhergehenden Ansprüche, **dadurch gekennzeichnet, dass** der kegelförmige Körper (10) ein Kegelstumpf ist, dessen Kante zwischen der konischen Kegelmantelfläche (12) und der Kegelbasisfläche (11) mit einer Fase (13) oder einem Radius versehen ist.

10. Verfahren zur Herstellung eines Gewindeeinsatzes nach einem der vorhergehenden Ansprüche mit folgenden Schritten:
Bereitstellen eines hülsenartigen Grundkörpers (1), der sich entlang einer Längsachse (I) von einer ersten Stirnseite (2) zu einer zweiten Stirnseite (3) erstreckt und eine sich entlang der Längsachse (I) erstreckende Durchgangsöffnung (4) mit geschlossener Innenwand aufweist,
Einbringen wenigstens einer Schneidnut (8) in den hülsenartigen Grundkörper (1) mittels der konischen Kegelmantelfläche (12) eines um eine Symmetrieachse (II) rotierenden kegelstumpfförmigen Sägeblatts (10), ohne dass das Sägeblatt (10) die geschlossene Innenwand der Durchgangsöffnung (4) berührt.

11. Verfahren nach Anspruch 10, **dadurch gekennzeichnet, dass** der Schnittpunkt der Symmetrieachse (II) mit der Kegelbasisfläche (11) des Sägeblatts (10) in der durch die erste Stirnseite (2) definierten Ebene liegt oder in Richtung von der zweiten Stirnseite (3) weg zu dieser versetzt ist und dass der Schneidwinkel (α), der im Schnittpunkt der Kegelbasisfläche (11) des Sägeblatts (10) mit dem Außenumfang der ersten Stirnseite (2) zwischen der Ebene der Kegelbasisfläche (11) des Sägeblatts (10) und dem Radius des Grundkörpers (1) gebildet wird, größer ist als der Neigungswinkel (β) zwischen der konischen Kegelmantelfläche (12) und der Symmetrieachse (II).

12. Verfahren nach einem der Ansprüche 10 oder 11, **dadurch gekennzeichnet, dass** der hülsenartige Grundkörper (1) vor dem Einbringen der wenigstens einen Schneidnut (8) mit einem an die erste Stirnseite (2) angrenzenden konischen Bereich (7), einem Innengewinde (6) und einem Außengewinde (5) versehen wird.

13. Verfahren nach einem der Ansprüche 10 bis 12, **dadurch gekennzeichnet, dass** zum Einbringen der wenigstens einen Schneidnut (8) in den hülsenartigen Grundkörper (1) das rotierende Sägeblatt (10) relativ zu dem Grundkörper (1) bewegt wird.

14. Verfahren nach einem der Ansprüche 10 bis 13, **dadurch gekennzeichnet, dass** zum Einbringen mehrerer Schneidnuten (8) in den hülsenartigen Grundkörper (1) der Grundkörper (1) nach dem Einbringen einer ersten Schneidnut (8) relativ zu dem Sägeblatt (10) um die Längsachse (I) gedreht wird und danach eine weitere Schneidnut (8) in den Grundkörper (1) eingebracht wird.

15. Verfahren nach einem der Ansprüche 10 bis 14, **dadurch gekennzeichnet, dass** der Grundkörper (1) mit einer Randschichthärtung und/oder einer korrosionshemmenden und/oder den Reibungskoeffizient senkenden Beschichtung versehen wird.

## Claims

1. A self-cutting thread insert with a sleeve-like base body (1)
which extends along a longitudinal axis (I) from a first front face (2) to a second front face (3),
the external diameter thereof being reduced in a conical region (7) adjacent to the first front face (2),
which has a through-opening (4) extending along the longitudinal axis (I) with a closed internal wall, and which has an internal thread (6) and an external thread (7),
wherein in the conical region (7) at least one cutting groove (8) is provided in the external thread (5),
**characterised in that**
the at least one cutting groove (8) is defined by a recess in the base body (1), the shape thereof being substantially defined by the intersection of the base body (1) with an at least partially cone-shaped body (10), which has at least one bottom cone surface (11), a conical outer cone surface (12) and an axis of symmetry (II),
wherein the point of intersection of the axis of symmetry (II) with the bottom cone surface (11) is located in the plane defined by the first front face (2) or in the direction away from the second front face (3) is offset relative to the plane defined by the first front face (2), and wherein the cutting angle (α), which is formed in the point of intersection of the bottom cone surface (11) with the external periphery of the first front face (2) between the plane of the bottom cone surface (11) and the radius of the base body (1), is larger than the angle of inclination (β) between the conical outer cone surface (12) and the axis of symmetry (II).

2. The thread insert according to Claim 1, **characterised in that** the cutting angle (α) is larger by the factor of 1.1 to 7, in particular larger by the factor of 2.5 to 5.5, than the angle of inclination (β).

3. The thread insert according to Claim 1 or 2, **characterised in that** the cutting angle (α) is between 10° and 30°, in particular between 12° and 20°.

4. The thread insert according to one of the preceding claims, **characterised in that** relative to the point of intersection of the axis of symmetry (II) with the bottom cone surface (11) the longitudinal axis (I) is offset by the value x in the direction away from the bottom cone surface (11).

5. The thread insert according to one of the preceding claims, **characterised in that** the bottom cone surface (11) is parallel to the longitudinal axis (I) or is inclined relative to the longitudinal axis (I) by an angle (γ) of up to 45° in a direction such that the side of the intersection (9, 9') of the base body (1) with the cone-shaped body (10) facing away from the bottom cone surface (11) is pivoted toward the first front face (2).

6. The thread insert according to one of the preceding claims, **characterised in that** the angle of inclination (β) is between 1° and 15°, in particular between 3° and 7°.

7. The thread insert according to one of the preceding claims, **characterised in that** a plurality of cutting grooves (8) are distributed, in particular uniformly, around the periphery of the base body (1).

8. The thread insert according to one of the preceding claims, **characterised in that** the diameter of the bottom cone surface (11) is larger, in particular larger by the factor of 1.5 to 7, than the external diameter of the base body (1) on the first front face (2) .

9. The thread insert according to one of the preceding claims, **characterised in that** the cone-shaped body (10) is a frustum of a cone, the edge thereof between the conical outer cone surface (12) and the bottom cone surface (11) being provided with a chamfer (13) or a radius.

10. A method for producing a thread insert according to one of the preceding claims, having the following steps:
providing a sleeve-like base body (1) which extends along a longitudinal axis (I) from a first front face (2) to a second front face (3) and has a through-opening (4) extending along the longitudinal axis (I) with a closed internal wall,
introducing at least one cutting groove (8) into the sleeve-like base body (1) by means of the conical outer cone surface (12) of a frustoconical saw blade (10) rotating about an axis of symmetry (II), without the saw blade (10) coming into contact with the closed internal wall of the through-opening (4).

11. The method according to Claim 10, **characterised in that** the point of intersection of the axis of symmetry (II) with the bottom cone surface (11) of the saw blade (10) is located in the plane defined by the first front face (2) or in the direction away from the second front face (3) is offset thereto and **in that** the cutting angle (α) which is formed in the point of intersection of the bottom cone surface (11) of the saw blade (10) with the external periphery of the first front face (2) between the plane of the bottom cone surface (11) of the saw blade (10) and the radius of the base body (1), is larger than the angle of inclination (β) between the conical outer cone surface (12) and the axis of symmetry (II).

12. The method according to one of Claims 10 or 11,
**characterised in that** before introducing the at least one cutting groove (8) the sleeve-like base body (1) is provided with a conical region (7), which is adjacent to the first front face (2), an internal thread (6) and an external thread (5).

13. The method according to one of Claims 10 to 12,
**characterised in that** for introducing the at least one cutting groove (8) into the sleeve-like base body (1) the rotating saw blade (10) is moved relative to the base body (1).

14. The method according to one of Claims 10 to 13,
**characterised in that** for introducing a plurality of cutting grooves (8) into the sleeve-like base body (1), after introducing a first cutting groove (8) the base body (1) is rotated relative to the saw blade (10) about the longitudinal axis (I) and subsequently a further cutting groove (8) is introduced into the base body (1).

15. The method according to one of Claims 10 to 14,
**characterised in that** the base body (1) is provided with surface hardening and/or a coating preventing corrosion and/or reducing the coefficient of friction.

## Revendications

1. Insert fileté autocoupant avec un corps de base de type manchon (1),
qui s'étend le long d'un axe longitudinal (I) d'une première face frontale (2) à une deuxième face frontale (3),
dont le diamètre extérieur (7) se réduit dans une zone conique contigüe à la première face frontale (2),
qui comporte une ouverture de passage (4) s'étendant le long de l'axe longitudinale (I) avec une paroi intérieure fermée, et
qui comporte un filetage intérieur (6) ainsi qu'une filetage extérieur (7),
au moins une rainure coupante (8) étant prévue dans la zone conique (7) dans le filetage extérieur (5),**caractérisé en ce qu'**au moins une rainure coupante (8) est définie par un évidement dans le corps de base (1), dont la forme est définie pour l'essentiel par la zone d'intersection du corps de base (1) avec au moins un corps (10) de forme conique au moins par endroits, qui comporte au moins une surface de base conique (11), une surface d'enveloppe de cône conique (12) et un axe de symétrie (II), le point d'intersection de l'axe de symétrie (II) avec la surface de base du cône (11) se situant dans le plan défini par la première face frontale (2) ou étant décalé en direction de la deuxième face frontale (3) directement vers le plan défini par la première face frontale (2) et l'angle de coupe (α) qui est formé au point d'intersection de la surface de base du cône (11) avec la périphérie extérieure de la première face frontale (2) entre le plan de la surface de base de cône (11) et le rayon du corps de base (1), étant plus grand que l'angle d'inclinaison (β) entre la surface d'enveloppe de cône conique (12) et l'axe de symétrie (II).

2. Insert fileté selon la revendication 1, **caractérisé en ce que** l'angle de coupe (α) est supérieur d'un facteur 1,1 à 7, notamment d'un facteur 2,5 à 5,5 supérieur à l'angle d'inclinaison (β).

3. Insert fileté selon la revendication 1 ou 2, **caractérisé en ce que** l'angle (α) se situe entre 10° et 30°, notamment entre 12° et 20°.

4. Insert fileté selon l'une quelconque des revendications précédentes, **caractérisé en ce que** l'axe longitudinal (I) est décalé par rapport au point d'intersection de l'axe de symétrie (II) avec la surface de base du cône (11) de la valeur x en direction de la surface de base de cône (11).

5. Insert fileté selon l'une quelconque des revendications précédentes, **caractérisé en ce que** la surface de base du cône (11) est parallèle à l'axe longitudinal (I) ou est incliné par rapport à l'axe longitudinal (I) d'un angle (γ) jusqu'à 45° dans la direction de sorte que la face opposée à la surface de base du cône (11) de la zone d'intersection (9,9') du corps de base (1) est pivotée avec le corps conique (10) sur la première face frontale (2).

6. Insert fileté selon l'une quelconque des revendications précédentes, **caractérisé en ce que** l'angle d'inclinaison (β) se situe entre 1° et 15°, notamment entre 3° et 7°.

7. Insert fileté selon l'une quelconque des revendications précédentes, **caractérisé en ce que** plusieurs rainures de coupe (8) sont réparties, notamment de façon uniforme, autour de la périphérie du corps de base (1).

8. Insert fileté selon l'une quelconque des revendications précédentes, **caractérisé en ce que** le diamètre de la surface de base de cône (11) est plus grand, notamment plus grand du facteur 1,5 à 7, que le diamètre extérieur du corps de base (1) sur la première face frontale (2).

9. Insert fileté selon l'une quelconque des revendications précédentes, **caractérisé en ce que** le corps de forme conique (10) est un tronc de cône dont l'arête est dotée d'un chanfrein (13) ou d'un rayon entre la surface d'enveloppe de cône (12) et la surface de base du cône (11) .

10. Procédé de fabrication d'un insert fileté selon l'une quelconque des revendications précédentes, avec les étapes suivantes :
préparation d'un corps de base de type manchon (1), qui s'étend le long d'un axe longitudinal (I) d'une première face frontale (2) à une deuxième face frontale (3) et comporte une ouverture de passage (4) s'étendant le long de l'axe longitudinale (I) avec une paroi intérieure fermée,
aménagement d'au moins une rainure de coupe (8) dans le corps de base de type manchon (1) au moyen de la surface d'enveloppe de cône conique (12) d'une lame de scie (10) de forme tronconique tournant autour d'un axe de symétrie (II) sans que la lame de scie (10) ne touche la paroi intérieure fermée de l'ouverture de passage (4) .

11. Procédé selon la revendication 10, **caractérisé en ce que** le point d'intersection de l'axe de symétrie (II) avec la surface de base du cône (11) de la lame de scie (10) se situe dans le plan défini par la première face frontale (2) ou est décalé par rapport à celui-ci en direction de la deuxième face frontale (3) et **en ce que** l'angle de coupe (α), qui est formé au point d'intersection de la surface de base de cône (11) de la lame de scie (10) avec la périphérie extérieure de la première face frontale (2) entre le plan de la surface de base du cône (11) de la lame de scie (10) et le rayon du corps de base (1), est plus grand que l'angle d'inclinaison (β) entre la surface d'enveloppe de cône conique (12) et l'axe de symétrie (II).

12. Procédé selon l'une quelconque des revendications 10 ou 11, **caractérisé en ce que** le corps de base de type manchon (1) est doté d'une zone conique (7) contigüe à la première face frontale (2), d'un filetage intérieur (6) et d'un filetage extérieur (5) avant l'aménagement d'au moins une rainure de coupe (8).

13. Procédé selon l'une quelconque des revendications 10 à 12, **caractérisé en ce que** pour l'aménagement d'au moins une rainure de coupe (8) dans le corps de base (1) de type manchon, la lame de scie (10) en rotation est déplacée par rapport au corps de base (1).

14. Procédé selon l'une quelconque des revendications 10 à 13, **caractérisé en ce que** pour l'aménagement de plusieurs rainures de coupe (8) dans le corps de base de type manchon (1), le corps de base (1) est tourné après l'aménagement d'une première rainure de coupe (8) par rapport à la lame de scie (10) autour de l'axe longitudinal (I) et une autre rainure de coupe (8) est ensuite aménagée dans le corps de base (1).

15. Procédé selon l'une quelconque des revendications 10 à 14, **caractérisé en ce que** le corps de base (1) est doté d'une trempe superficielle et/ou d'un revêtement anticorrosion et/ou diminuant le coefficient de frottement.
